(19) Europäisches Patentamt
European Patent Office
Office européen des brevets

(11) **EP 1 619 844 A1**

(12) **DEMANDE DE BREVET EUROPEEN**

(43) Date de publication:
**25.01.2006 Bulletin 2006/04**

(51) Int Cl.:
*H04L 12/58* (2006.01)

(21) Numéro de dépôt: **05291534.5**

(22) Date de dépôt: **18.07.2005**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **21.07.2004 FR 0408094**

(71) Demandeur: **France Télécom**
**75015 Paris (FR)**

(72) Inventeurs:
- **Baupin, Nicolas**
  **14860 Ranville (FR)**
- **Dauguet, Anthony**
  **14260 Saint Pierre du Fresne (FR)**
- **Arkate, Mohamed**
  **14000 Caen (FR)**

(74) Mandataire: **Habasque, Etienne J. Jean-François et al**
**Cabinet Lavoix**
**2, Place d'Estienne d'Orves**
**75441 Paris Cédex 09 (FR)**

(54) **Procédé et système de gestion de la surcharge d'identité et de la disponibilité privée/publique d'une adresse de messagerie instanée.**

(57)     L'invention concerne un procédé et un système de gestion de la surcharge d'identité et de la disponibilité privée/publique d'une adresse de messagerie instantanée.

Pour toute adresse interne ($User_i$@E) à un réseau d'entreprise, il consiste à (A) déclarer une adresse interne générique (Commercial@E), dans une liste d'adresses de contact, et suite à la transmission (B) par un client externe (Ext@X) d'une requête à (Commercial@E) l'adresse interne générique, transmettre à chaque adresse interne ($User_i$@E) du groupe la requête, puis sur réponse (D) à cette requête à l'adresse externe (Ext@X) par l'une des adresses internes ($User_1$@E) appartenant au groupe, transmettre aux autres adresses internes ($User_{j \neq 1}$@E) une notification de réponse. Ceci permet de maintenir libres les autres adresses internes ($User_{j \neq 1}$@E) pour toute nouvelle requête adressée.

Application à la gestion de la messagerie instantanée d'entreprise.

*FIG.1*

## Description

L'invention concerne le domaine technique des communications interpersonnelles par messages électroniques en messagerie instantanée.

Elle s'applique plus particulièrement aux services de messagerie instantanée en entreprise, en particulier à l'échange de messages entre adresses internes en messagerie instantanée, au sein d'un réseau local d'entreprise, en communication avec des adresses de client externes à ce réseau.

Dans la technique actuelle, l'échange de messages entre adresses internes en messagerie instantanée au sein d'une entreprise, et d'un réseau local d'entreprise équipant celle-ci, les utilisateurs titulaires chacun d'une adresse interne doivent déclarer leur présence, par le biais de leur adresse interne, sur un serveur de messagerie instantanée, serveur IM, ouvert sur l'extérieur et sous le compte qu'ils veulent utiliser, outre leur déclaration de présence sur le serveur IM interne de l'entreprise, avec leur identité propre. Ceci nécessite la mise en oeuvre et l'utilisation de deux serveurs IM simultanément.

En outre, dans les systèmes de la technique actuelle précitée, les adresses ou contacts visibles de l'extérieur sont obligatoirement liés à l'adresse d'une personne physique de l'entreprise, Commercial1 lié à User1 et Commercial2 lié à User2 par exemple.

La présente invention a pour objet de remédier aux inconvénients de la technique antérieure, en apportant en outre une simplification de mise en oeuvre, par suppression de l'un des serveurs IM.

En particulier, un objet de la présente invention est de permettre aux utilisateurs d'une entreprise disposant d'une adresse interne de déclarer auprès d'un serveur IM unique leur présence/disponibilité à leur adresse interne, auprès des autres utilisateurs, avec leur propre identité ou adresse, mais de n'exposer toutefois à l'extérieur du réseau local d'entreprise, et donc de l'entreprise, qu'une adresse spécifique, pouvant définir une adresse signifiante, dans le contexte de l'entreprise.

Un autre objet de la présente invention est en outre de fournir la possibilité d'un regroupement, sous une adresse ou contact unique vu de l'extérieur au réseau local d'entreprise, d'une ou plusieurs adresses internes de messagerie instantanée susceptibles d'être contactées de l'extérieur par l'intermédiaire de l'adresse unique.

Un autre objet de la présente invention est en outre de fournir la possibilité à tout utilisateur client titulaire d'une adresse interne de messagerie instantanée dans un réseau local d'entreprise de déclarer ou non individuellement son accessibilité à l'extérieur de ce réseau local d'entreprise à tout tiers client utilisateur externe.

Un autre objet de la présente invention est en outre de fournir à tout utilisateur client titulaire d'une adresse interne de messagerie instantanée dans un réseau local d'entreprise, qui déclare son accessibilité à l'extérieur de ce dernier sous une forme distincte de celle utilisée en interne, cette forme distincte étant signifiante ou banalisée, une fonction de surcharge d'identité ou d'adresse.

Un autre objet de la présente invention est enfin, grâce au processus de surcharge d'identité précité, d'associer à un groupe d'adresses ou contacts internes de réseau local d'entreprise un contact ou adresse interne générique déclarée, jouant le rôle de contact ou adresse externe, et de bénéficier en conséquence de fonctionnalités avancées de mises en relation, grâce à la messagerie instantanée de l'entreprise de type ACD, pour Automatic Call Distribution en anglais.

Le procédé et le système de gestion de la surcharge d'identité et de la disponibilité privée/publique d'une adresse interne de messagerie instantanée associée à un réseau d'entreprise, objets de la présente invention, ont pour objet remarquable et permettent, à partir d'un serveur de traduction d'adresse, à toute adresse interne, de déclarer une adresse interne générique, commune à un groupe d'adresses internes distinctes, et, sur transmission par un utilisateur client externe d'une requête à cette adresse interne générique déclarée, transmettre cette requête à chaque adresse interne membre du groupe, puis sur transmission d'une réponse à cette requête, par l'une des adresses internes membre du groupe, transmettre aux autres adresses internes membres du groupe, distinctes de l'adresse interne auteur de la réponse, une notification de réponse. Ceci permet de maintenir les autres adresses internes membres du groupe disponibles pour toute nouvelle requête transmise à l'adresse interne déclarée.

Le procédé et le système objets de la présente invention trouvent application à la gestion de la messagerie instantanée des réseaux locaux d'entreprise, en particulier des flux internes et externes de messagerie instantanée de ces derniers.

Ils seront mieux compris à la lecture de la description et à l'observation des dessins ci-après dans lesquels,

- la figure 1 représente, à titre illustratif, un organigramme général des étapes essentielles de mise en oeuvre du procédé objet de la présente invention ;
- la figure 2a représente sous forme de schémas blocs une architecture spécifique d'un système de gestion de la surcharge d'identité et de la disponibilité privée/publique d'une adresse de messagerie instantanée conforme à l'objet de la présente invention ;
- la figure 2b représente, à titre d'exemple non limitatif, sous forme de blocs fonctionnels l'architecture d'un serveur de traduction d'adresses internes intégré au réseau local d'entreprise constitutif du système objet de la présente invention ;
- la figure 3a représente, à titre illustratif, un diagramme temporel illustratif de l'étape de déclaration d'une adresse de messagerie interne générique par un groupe d'utilisateurs clients disposant chacun d'une adresse interne de messagerie instantanée associée au réseau local d'entreprise et mise en oeuvre par le serveur de traduction d'adresses et le système objets de la présente invention ;

- la figure 3b représente, à titre illustratif, un diagramme temporel illustratif des étapes de transmission interne de la requête de l'utilisateur client externe et de la notification de la réponse à cette requête à l'adresse interne de tous les utilisateurs clients membres du groupe, distincte de l'adresse interne, à partir de laquelle cette réponse a été émise.

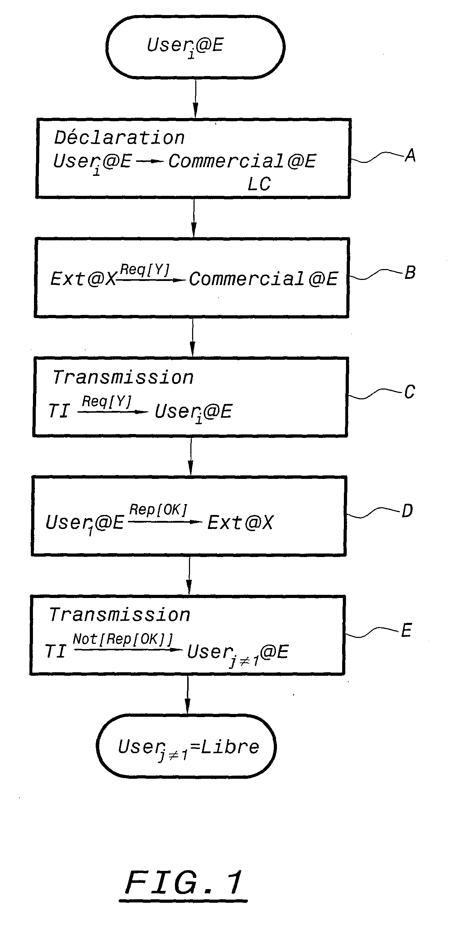

Une description plus détaillée du procédé de gestion de la surcharge d'identité et de la disponibilité privée/publique d'une adresse interne de messagerie instantanée associée à un réseau d'entreprise conforme à l'objet de la présente invention sera maintenant donnée en liaison avec la figure 1.

D'une manière générale, on considère une pluralité d'adresses internes de messagerie instantanée désignée $User_i@E$ où $User_i$ désigne l'adresse effective du poste de travail d'un utilisateur client de ce réseau local d'entreprise et E désigne l'entreprise elle-même ou le réseau local équipant cette dernière. L'ensemble des adresses de messagerie instantanée est géré par les protocoles habituels de gestion d'adresses de messagerie instantanée, à partir d'un serveur de messagerie instantanée, serveur IM privé, de manière classique, ainsi que mentionné précédemment dans la description.

Conformément au procédé objet de l'invention, celui-ci consiste en une étape A pour toute adresse interne précitée du réseau d'entreprise à déclarer une adresse interne générique de messagerie instantanée, désignée arbitrairement par Commercial@E. Cette déclaration est symbolisée par la relation $User_i@E \rightarrow commercial@E$.

On comprend que, par cette déclaration, chaque utilisateur client du réseau d'entreprise peut donc déclarer accepter appartenir à un groupe d'adresses dont l'adresse générique de messagerie est l'adresse commerciale Commercial@E précitée.

Suite à la transmission par un client externe, noté Ext@X, et à la réception d'une requête transmise à l'adresse interne instantanée générique déclarée précitée, représentée à l'étape B par la relation

$$Ext@X \xrightarrow{Req[Y]} Commercial@E,$$

cette étape est suivie à une étape C d'une transmission à chaque adresse interne de messagerie instantanée $User_i@E$ de la requête précitée. Cette opération est notée

$$TI \xrightarrow{Req[Y]} User_i@E,$$

où TI désigne une transmission interne sur le réseau local.

On comprend bien sûr qu'à l'étape C, la transmission en interne TI est effectuée sur le réseau local à toute adresse interne $User_i$ appartenant au groupe disposant de l'adresse interne générique de messagerie instantanée Commercial@E.

Sur réponse à la requête au client à l'adresse externe Ext@X à l'étape D notée

$$User_1@E \xrightarrow{Rep[OK]} Ext@X,$$

l'utilisateur $User_1$ étant réputé accepter de répondre, cette étape est alors suivie d'une étape E consistant en la transmission en interne TI aux autres adresses internes membres du groupe et distinctes de l'adresse interne auteur de la réponse, c'est-à-dire aux adresses $User_{j\neq1}@E$ d'une notification de réponse.

Cette opération est notée

$$TI \xrightarrow{Not[REP[OK]]} .$$

L'opération de transmission précitée permet de maintenir disponibles les autres adresses internes, $j\neq1$, pour toute nouvelle requête adressée par un client externe à l'adresse interne générique déclarée Commercial@E.

D'une manière générale, on indique que l'adresse interne générique de messagerie instantanée précitée peut être avantageusement associée à une fonction, une position hiérarchique ou opérationnelle de l'entreprise ou, le cas échéant, une dénomination signifiante ou banalisée. L'utilisation d'une dénomination signifiante permet en particulier à tout client externe d'avoir accès aux services les plus divers de l'entreprise indépendamment de l'identité de la personne physique titulaire de l'adresse interne de messagerie, alors que l'utilisation d'une dénomination banalisée permet par exemple, à l'administrateur réseau, de contrôler plus facilement les échanges en particulier en ce qui concerne la sécurité vis-à-vis des intrusions dans le réseau local d'entreprise correspondant.

On comprend bien sûr que l'adresse interne générique déclarée, bien que cette dernière soit déclarée comme adresse interne et gérée en conséquence conformément au processus de gestion des adresses internes de messagerie instantanée du réseau local d'entreprise, l'adresse interne générique de messagerie déclarée est également vue comme adresse externe, c'est-à-dire accessible par tout utilisateur client externe à une adresse quelconque externe au réseau local d'entreprise par l'intermédiaire de tout réseau ou de l'Internet, par exemple.

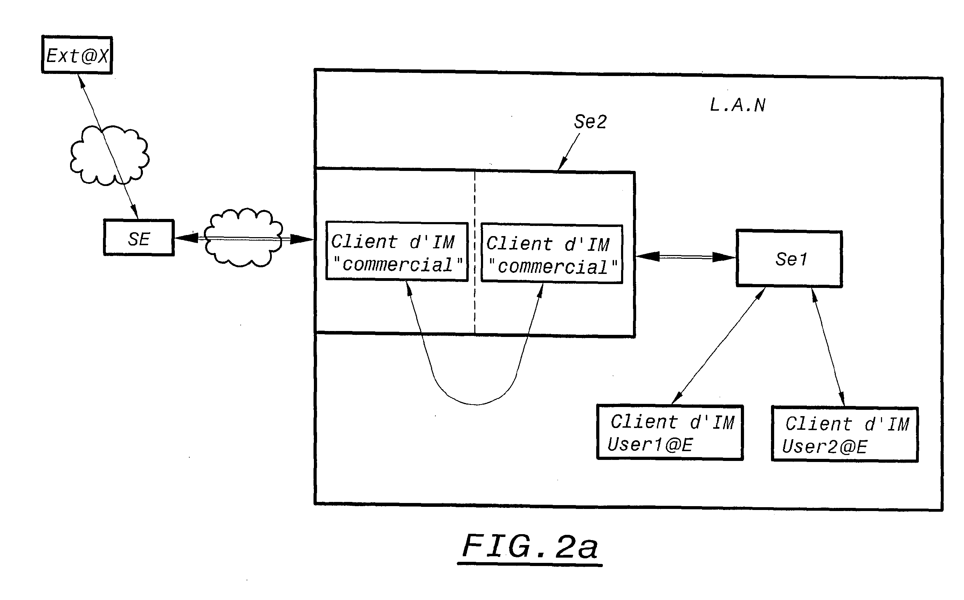

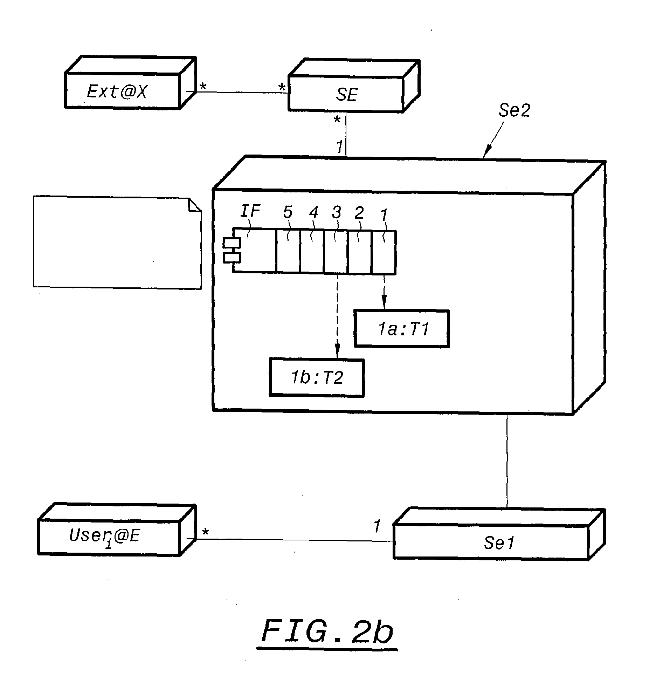

Une description plus détaillée d'un système de gestion de la surcharge d'identité de la disponibilité privée/publique d'une adresse de messagerie instantanée conforme à l'objet de la présente invention sera maintenant donnée en liaison avec les figures 2a et 2b.

La notion de disponibilité publique recouvre celle de la disponibilité d'une adresse interne à l'extérieur du réseau d'entreprise auquel cette adresse interne est attachée.

En référence à la figure 2a, on rappelle que le réseau d'entreprise L.A.N. (Local Area Network en anglais) comporte par exemple une pluralité de postes de travail, à chacun des utilisateurs desquels est associée au moins une adresse interne de messagerie instantanée $User_i@E$.

Bien entendu chaque poste de travail à l'adresse indiquée est client de messagerie instantanée, vis-à-vis d'un serveur privé de messagerie instantanée $Se_1$ gérant les adresses internes et interconnecté à un serveur externe de messagerie instantanée externe SE. Le serveur externe SE peut être un serveur grand public ou un serveur de messagerie instantanée privé, assurant la gestion de la messagerie instantanée de plusieurs réseaux d'entreprise notamment dans le cas de relations B2B (Business to Business electronic commerce en anglais, Commerce Electronique Interentreprises en français). Ce dernier est connecté au réseau local L.A.N. par l'intermédiaire de tout réseau étendu de l'Internet ou autre.

Le serveur externe de messagerie instantanée SE permet à un utilisateur client externe à l'adresse Ext@X de transmettre de l'extérieur de l'entreprise, c'est-à-dire en tout lieu du réseau étendu quelconque, une requête à une adresse interne déterminée du réseau local d'entreprise L.A.N.

Ainsi qu'on l'a représenté en outre en figure 2a, selon un aspect remarquable du système objet de la présente invention, celui-ci comporte en outre un serveur de traduction d'adresses, noté $Se_2$, permettant à toute adresse interne d'utilisateur interne User;@E de déclarer une adresse interne générique, c'est-à-dire l'adresse commerciale Commercial@E précédemment mentionnée dans la description.

Cette adresse est commune à un groupe d'adresses internes distinctes.

Sur transmission par un utilisateur client externe, ainsi que représenté, conformément à la mise en oeuvre du procédé objet de l'invention en figure 1, d'une requête à l'adresse interne générique déclarée Commercial@E, le serveur de traduction d'adresses $Se_2$ permet en outre la transmission de la requête selon la relation de l'étape C de la figure 1 à chaque adresse interne membre du groupe, c'est-à-dire à toutes les adresses $User_i@E$ disposant de l'adresse interne générique déclarée.

Enfin, le serveur de traduction d'adresse $Se_2$ permet suite à la transmission d'une réponse à la requête émanant de l'utilisateur client externe à l'adresse Ext@X par l'une des adresses internes membres du groupe, un utilisateur client titulaire de cette adresse prenant l'initiative de répondre à la requête de l'utilisateur client externe, de transmettre aux autres adresses internes membres du groupe, distinctes de l'adresse interne auteur de la réponse, c'est-à-dire aux adresses $User_{j\neq1}$ une notification de réponse selon l'étape E de la figure 1.

Ceci permet de maintenir les autres adresses internes membres du groupe disponibles pour toute nouvelle requête transmise à l'adresse interne générique déclarée.

On comprend en particulier que le maintien à disponibilité des adresses $User_{j\neq1}$ s'entend du maintien à disponibilité pourvu que l'adresse de ces terminaux soit effectivement disponible vis-à-vis d'une requête semblable émanant d'un autre client extérieur.

De manière particulièrement avantageuse, le serveur de traduction d'adresse $Se_2$ est constitué par un serveur proxy de messagerie instantanée interconnecté sur le réseau local d'entreprise L.A.N.

On rappelle que la notion de serveur proxy correspond à celle d'un serveur mandataire, ayant pour objet de réaliser les fonctions précédemment mentionnées dans la description.

La notion de serveur mandataire correspond en fait en l'adjonction des fonctions précitées au serveur $Se_1$ de messagerie instantanée privée afin de permettre la réalisation et la mise en oeuvre des processus de surcharge d'identité et de gestion de visibilité et de disponibilité privée/publique mentionnée précédemment dans la description.

En ce qui concerne les rôles et/ou fonctions des adresses internes précitées, lors de la mise en oeuvre du procédé objet de la présente invention et du fonctionnement du système objet de la présente invention, tels que décrits en liaison avec les figures 1 et 2a, les indications relatives au rôle précité sont les suivantes :

- $User_i@E$ est vu comme une adresse interne de messagerie instantanée de l'entreprise en interne et n'est aucunement visible d'un point quelconque du réseau étendu à l'extérieur du réseau local L.A.N.
- Commercial@E est vu comme une adresse interne de messagerie instantanée et est également vu comme adresse externe, en particulier par le serveur externe de messagerie instantanée SE et bien sûr par le client externe à l'adresse Ext@X.

Le client externe à l'adresse Ext@x est vu comme client par le serveur de traduction d'adresse $Se_2$ à l'adresse Ext@x en externe et comme client à l'adresse Commercial@E en interne par le serveur de messagerie instantanée privé $Se_1$.

Compte tenu des considérations précédentes, on indique que la fonction principale du serveur de traduction d'adresses $Se_2$ est de masquer l'identité de l'utilisateur client interne à l'adresse $User_i$ et de ne révéler à l'extérieur pour l'adresse $User_1@E$ que sa fonction à l'intérieur de l'entreprise, lorsque l'adresse générique déclarée correspond à une fonction commune aux membres du groupe.

Une description plus détaillée d'un mode de mise en oeuvre préférentiel du serveur de traduction d'adresses $Se_2$, objet de la présente invention sera maintenant donnée en liaison avec la figure 2b.

Ainsi que représenté sur la figure 2b précitée, le serveur de traduction d'adresse $Se_2$ comporte, outre une interface IF de communication en réseau IP de type classique, des éléments logiciels ou de structure de données permettant d'assurer l'ensemble des opérations précédemment citées sur requête adressée par l'utilisateur client externe à l'entreprise à l'adresse interne générique déclarée $Commercial@E$.

Ces opérations concernent l'exécution de la transmission de la requête précitée à chaque adresse interne puis de la notification de réponse aux autres adresses internes membres du groupe.

Ainsi que représenté sur la figure 2b, le serveur de traduction d'adresse comporte un module 1 de vérification de la disponibilité de chaque adresse interne membre du groupe associée à l'adresse interne générique déclarée, ce module 1, module logiciel, étant associé à une structure de données 1 a constituant une table de correspondance et à une structure de données 1b correspondant à une table de surcharge d'identité permettant d'assurer, les fonctions et modes opératoires ci-après.

La description qui suit est donnée pour le cas non limitatif d'un premier utilisateur noté $User_1$ disposant de l'adresse interne $User_1@E$ et d'un deuxième utilisateur $User_2$ disposant de l'adresse interne $User_2@E$.

Le serveur de traduction d'adresses $Se_2$ se comporte alors comme un ensemble de clients disposant d'une pluralité d'adresses internes génériques déclarées, telles que $Commercial@E$, $Chefdeprojet@E$ ...

Chaque client disposant de cette pluralité d'adresses internes génériques est client vis-à-vis du serveur de messagerie instantanée privé $Se_1$ et associé à un ou plusieurs utilisateurs internes de l'entreprise.

Dans l'exemple considéré, le client $Commercial@E$ est associé au groupe formé par $User_1@E$ et $User_2@E$. Dans ces conditions, ainsi que mentionné précédemment, ces derniers sont vus par l'extérieur comme $Commercial@E$ et non comme leur adresse interne respective.

Pour que le client disposant de l'adresse $Commercial@E$ soit associé aux adresses $User_1@E$ et $User_2@E$, il suffit que les utilisateurs de ces dernières l'ajoutent dans leur liste de contacts.

Le serveur de traduction d'adresses $Se_2$ déclare aussitôt la disponibilité du client commercial auprès du serveur externe de messagerie instantanée SE et met à jour une structure de données, la structure 1a représentée par le tableau $T_1$ ci-après et constituant une table de correspondance entre l'identifiant du contact interne $User_1$ et $User_2$ et du client commercial.

| Client $Se_2$ | Correspondant |
|---|---|
| Commercial | User1 |
| Commercial | User2 |
| ... | ... |

Quand un utilisateur externe à l'adresse $Ext@X$ transmet un premier message au commercial, c'est-à-dire à l'adresse interne générique $Commercial@E$, par exemple, le serveur de traduction d'adresse transfère ce message en indiquant que l'émetteur du message est à l'adresse $Commercial@E$ à tous les contacts internes de l'entreprise, c'est-à-dire aux membres du groupe qui ont ajouté l'adresse interne générique commerciale $Commercial@E$ à leurs contacts.

Quand l'un des utilisateurs internes, tels que par exemple l'utilisateur client à l'adresse $User_1@E$ de l'entreprise répond à ce message, le serveur de traduction d'adresse transfère la réponse à l'utilisateur externe et envoie alors une indication aux autres utilisateurs internes membres du groupe qui ont l'adresse $Commercial@E$ comme contact afin de leur notifier que la requête est prise en compte par l'un des membres du groupe, c'est-à-dire le membre disposant de l'adresse $User_1@E$.

Dès notification de la prise en compte précitée, le serveur de traduction d'adresses construit une autre structure de données 1b, représentée au tableau $T_2$ ci-après, mettant en relation les identifiants de l'utilisateur externe, de l'utilisateur interne et de l'adresse interne générique permettant la liaison entre les deux pour que les messages suivants de cette discussion ne soient adressés qu'au contact interne qui a répondu.

| Client externe | Commercial | $User_1$ |
|---|---|---|
| | | |

Le tableau $T_2$ précité indique que la personne utilisateur client titulaire de l'adresse interne de l'entreprise $User_1@E$ qui a souscrit à l'adresse interne générique déclarée $Commercial@E$ et qui donc, dans ce cas, occupe la fonction de commercial dans l'entreprise est en contact avec le client externe à l'adresse $Ext@X$.

Tous les autres utilisateurs clients de l'entreprise qui remplissent la même fonction que $User_1$ reçoivent alors un message de la part du serveur de traduction d'adresse $Se_2$ leur indiquant que cet utilisateur client a pris en charge la conversation avec le client externe.

Lorsqu'un utilisateur du serveur de messagerie instantanée privé $Se_1$ supprime dans la liste de ses contacts un client générique tel que Commercial à l'adresse $Commercial@E$, par exemple, le serveur de traduction d'adresse $Se_2$ annule aussitôt la disponibilité de celui-ci auprès du serveur externe de messagerie instantanée SE, d'une part, et met à jour la table de correspondances représentée au tableau $T_1$, d'autre part.

Les fonctions précédentes sont ainsi mises en oeuvre grâce à un module logiciel 1 et aux structures de données 1a et 1b de la figure 2b.

Le serveur de traduction d'adresse $Se_2$ comporte en outre un module 2, de type module logiciel, de transmission via le serveur externe de messagerie instantanée SE d'un message d'acceptation de la requête à l'utilisateur client externe Ext@X et un module 3, module logiciel de transmission, via le serveur de messagerie instantanée privé du message transmis par l'utilisateur client externe Ext@X à l'adresse interne générique suite à vérification de la disponibilité d'au moins une adresse interne membre du groupe, ainsi que mentionné précédemment dans la description, associée à l'adresse interne générique, vers chacune des autres adresses internes disponibles de ce groupe. Cette opération est représentée en figure 2b par le terminal client $User_i$ à l'adresse $User_i$@E où i désigne tous les membres du groupe disposant de l'adresse générique déclarée Commercial@E.

En outre, le serveur de traduction d'adresses comporte un module de réception via le serveur de messagerie instantanée privé, module de réception 4, de type logiciel, d'un message de réponse à l'utilisateur client externe transmis par l'une des adresses internes membres du groupe, c'est-à-dire l'utilisateur client User1 à l'adresse $User_1$@E.

Le serveur de traduction d'adresse $Se_2$ comporte enfin un module 5 de transmission, module logiciel, à chacune des autres adresses internes membres du groupe distinctes de l'adresse interne auteur de la réponse, c'est-à-dire aux utilisateurs client du groupe disposant chacun d'une adresse $User_{j\neq1}$ d'un message de notification de prise en charge de la transaction avec l'utilisateur client externe à l'adresse Ext@X par l'utilisateur client disposant de l'adresse interne auteur de la réponse.

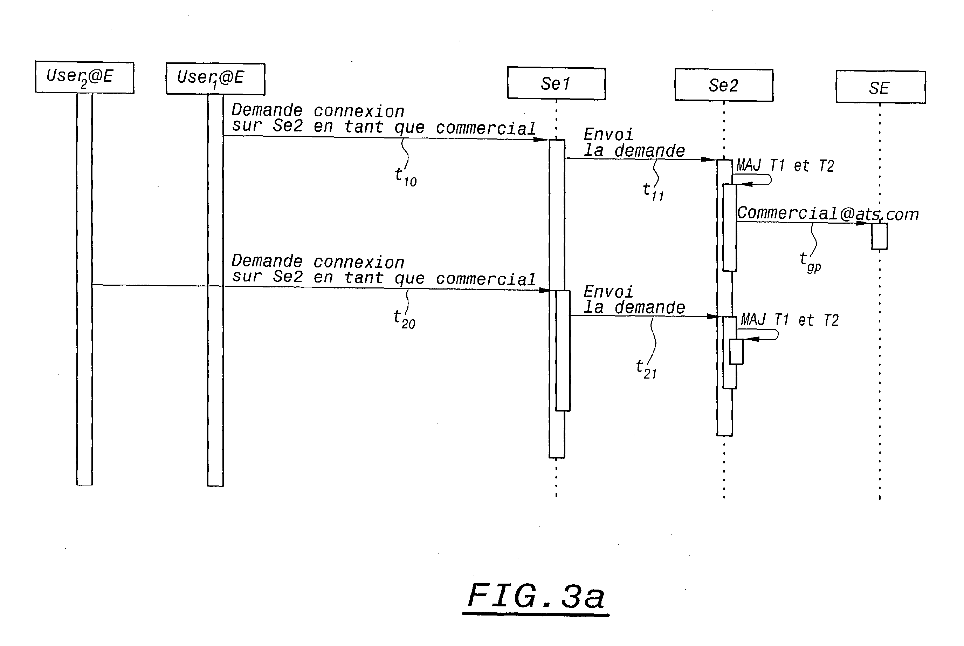

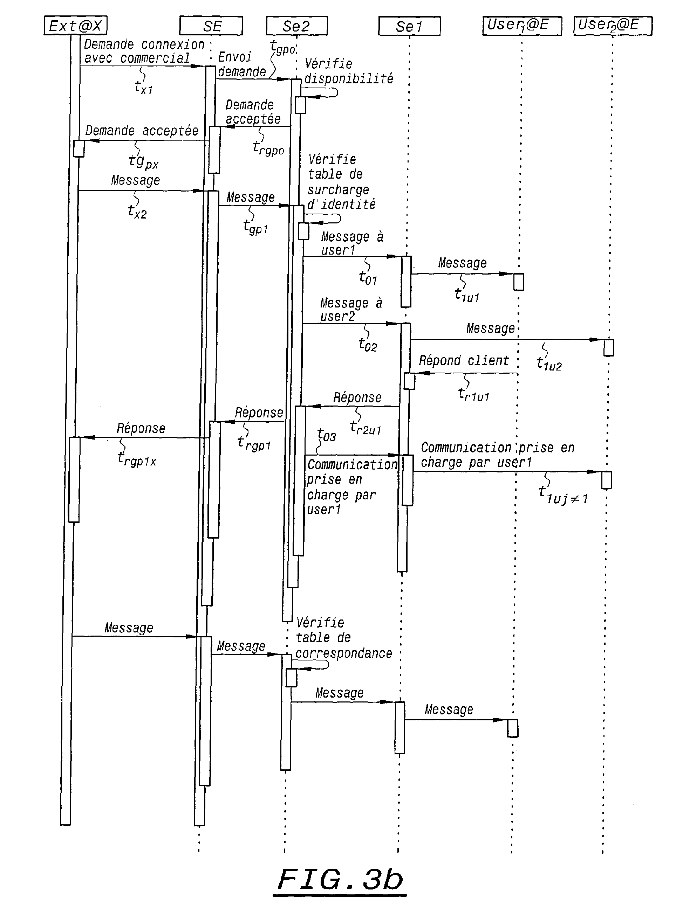

Un exemple de mise en oeuvre du protocole d'échange de messages pour exécuter la déclaration d'une adresse interne générique de messagerie instantanée par chaque utilisateur disposant d'une adresse interne de messagerie instantanée d'entreprise sera donné maintenant en référence à la figure 3a puis un exemple de protocole d'échange de messages pour l'exécution des opérations de transmission interne de la requête de l'utilisateur client externe et de la notification de la réponse à cette requête à l'adresse de tous les utilisateurs clients membres du groupe sera donné en liaison avec la figure 3b.

En référence à la figure 3a, on indique que, pour toute adresse interne de déclaration d'une adresse interne générique, telle que Commercial@E par l'un des utilisateurs précités, cette opération consiste au moins à adresser, à partir de chaque adresse interne au serveur de traduction d'adresse $Se_2$, par l'intermédiaire du serveur privé de messagerie instantanée $Se_1$, une requête de déclaration d'adresse générique interne, ces opérations de transmission étant référencées $t_{10}$ respectivement $t_{20}$ entre chaque utilisateur $User_1$ et $User_2$ et le serveur de messagerie instantanée privé $Se_1$ respectivement $t_{11}$ et $t_{21}$ entre ce premier serveur et le serveur de traduction d'adresse $Se_2$.

Dès réception des messages par les transactions $t_{11}$ et $t_{21}$ précitées, le serveur de traduction d'adresses $Se_2$ procède à une mise à jour des tables, table de correspondance et table de surcharge d'identité représentées aux tableaux $T_1$ et $T_2$ précédemment décrits dans la description.

Dès la mise à jour des tables précitées, le serveur de traduction d'adresses $Se_2$ procède alors à la transmission d'une notification au serveur externe de messagerie instantanée SE de la notification de l'adresse interne générique déclarée Commercial@E par exemple, ou toute adresse correspondante indiquant que l'adresse interne générique déclarée correspondante est disponible au niveau du serveur de traduction d'adresses $Se_2$.

Sur la figure 3a, cette dernière adresse est notée Commercial@ats.com.

Après les transactions exécutées en figure 3a, on comprend, en particulier, que le système objet de la présente invention, et, notamment le serveur de traduction d'adresses $Se_2$, sont totalement en mesure de donner suite à une requête de transaction émise par un client utilisateur externe à l'adresse Ext@X dans les conditions qui seront explicitées maintenant en liaison avec la figure 3b.

En référence à la figure précitée, l'utilisateur client extérieur, par une transaction $t_{x1}$ transmet une demande de connexion avec l'adresse interne générique déclarée, c'est-à-dire en vue d'obtenir l'assistance d'une personne occupant une fonction commerciale.

La transaction $t_{x1}$ intervient entre le terminal de l'utilisateur client externe et le serveur externe de messagerie instantanée SE.

Ce dernier transmet par une transaction un message de demande, transaction notée $t_{gpo}$ au serveur de traduction d'adresses $Se_2$ correspondant.

Ce dernier procède alors à une vérification de disponibilité d'au moins une adresse interne et d'un utilisateur de celle-ci membre du groupe correspondant.

Sur réponse positive à cette vérification, le serveur de traduction d'adresses $Se_2$, par une requête de réponse $t_{rgpo}$, transmet un message d'acceptation au serveur SE.

Ce dernier transmet la même réponse par une transaction $t_{gpx}$ vers le terminal du client externe à l'adresse Ext@X.

Le client externe procède alors à l'envoi d'un message d'information par une transaction $t_{x2}$ à l'adresse interne générique déclarée Commercial@E par l'intermédiaire du serveur de messagerie instantanée public SGP, lequel relaie cette transaction par une transaction

$t_{gp1}$ vers le serveur de traduction d'adresses $Se_2$.

Ce dernier, dès réception de la transaction précitée, procède à la vérification de la table de surcharge d'identité conformément à la table $T_2$.

Après la vérification précitée, le serveur traducteur d'adresses $Se_2$ transmet le message d'information à l'ensemble des utilisateurs membres du groupe, c'est-à-dire dans l'exemple de la figure 3b à $User_1$ et $User_2$, par des transactions $t_{01}$ respectivement $t_{02}$ par l'intermédiaire du serveur de messagerie instantanée privé $Se_1$, lequel relaie par des transactions vers les terminaux des utilisateurs User1 et User2 aux adresses $User_1@E$ et $User_2@E$, transactions désignées $t_{1u1}$ et $t_{1u2}$.

Lorsque l'un des utilisateurs $User_1$, par exemple, répond et accepte de communiquer avec l'utilisateur externe par une transaction $t_{r1u1}$ transmise au serveur de messagerie instantanée $Se_1$ privé, ce dernier relaie la réponse précitée par une transaction $t_{r2u1}$ transmise au serveur de traduction d'adresse $Se_2$, lequel assure le relais de la transmission de la réponse par une transaction vers le serveur externe de messagerie instantanée SE, transaction $t_{rgp1}$, suivi d'un autre relais par une transaction $t_{rgp1x}$ du serveur SE vers le terminal client à l'adresse Ext@X.

Successivement, le serveur de traduction d'adresse $Se_2$ procède à la notification de la prise en charge de la communication client par l'utilisateur qui a répondu au message, c'est-à-dire User1 dans l'exemple donné, par une transaction $t_{03}$ transmise du serveur de traduction d'adresse $Se_2$ vers le serveur de messagerie instantanée privé $Se_1$, lequel relaie la transaction $t_{03}$ par la communication de la prise en charge par l'utilisateur auteur de la réponse par une ou plusieurs transactions notées $t_{1uj\neq1}$ pour chacun des terminaux utilisateurs dont l'adresse interne de l'entreprise est différente de celle du terminal utilisateur auteur de la réponse.

On comprend bien sûr que le processus peut être repris non seulement sur requête d'un utilisateur client externe tiers, c'est-à-dire à une adresse différente de l'adresse Ext@X, pour la même adresse interne générique, pourvu qu'il existe des adresses internes de messagerie instantanée appartenant au groupe qui soient maintenues disponibles et effectivement disponibles pour une transaction, ou pour toute adresse interne générique déclarée distincte ensemble des adresses génériques déclarées pouvant couvrir toutes les fonctions et services de l'entreprise.

**Revendications**

1. Procédé de gestion de la surcharge d'identité et de la disponibilité privée/publique d'une adresse interne de messagerie instantanée associée à un réseau d'entreprise, **caractérisé en ce qu'**il consiste pour toute adresse interne de ce réseau d'entreprise à :

- déclarer une adresse interne générique de messagerie instantanée dans une liste d'adresses de contact, et pour tout groupe d'adresse interne distincte de ce réseau d'entreprise disposant d'une même adresse générique déclarée et formant un groupe, suite à la transmission, par un client externe, d'une requête à ladite adresse interne instantanée générique déclarée,

- transmettre à chaque adresse interne de messagerie instantanée appartenant au groupe, sur ledit réseau d'entreprise, ladite requête, et sur réponse à ladite requête audit client à ladite adresse externe par l'une des adresses internes de messagerie instantanée appartenant au groupe,

- transmettre aux autres adresses internes membres du groupe, distinctes de l'adresse interne auteur de la réponse, une notification de réponse, ce qui permet de maintenir disponibles lesdites autres adresses internes pour toute nouvelle requête adressée, par un client externe, à l'adresse interne générique déclarée.

2. Procédé selon la revendication 1, **caractérisé en ce que** à ladite adresse interne générique déclarée est associée une fonction, une position hiérarchique, ou opérationnelle de l'entreprise, une dénomination signifiante ou banalisée.

3. Système de gestion de la surcharge d'identité et de la disponibilité privée/publique d'une adresse de messagerie instantanée d'un réseau local d'entreprise, comprenant au moins dans ce réseau d'entreprise une pluralité de postes de travail, à chaque utilisateur de ces postes de travail étant associée au moins une adresse interne de messagerie instantanée, un serveur privé de messagerie instantanée gérant lesdites adresses internes et interconnecté à un serveur externe de messagerie instantanée, permettant à un utilisateur client externe à l'entreprise de transmettre une requête à une adresse interne déterminée, **caractérisé en ce qu'**il comporte en outre un serveur de traduction d'adresse, permettant, à toute adresse interne, de :

- déclarer une adresse interne générique, commune à un groupe d'adresses internes distinctes, et, sur transmission par un utilisateur client externe d'une requête à ladite adresse interne générique déclarée,

- transmettre ladite requête à chaque adresse interne membre du groupe, puis, sur transmission d'une réponse à ladite requête par l'une des adresses internes membre du groupe,

- transmettre aux autres adresses internes membres du groupe distinctes de l'adresse interne auteur de la réponse, une notification de réponse, ce qui permet de maintenir lesdites autres adresses internes membres du groupe disponibles pour toute nouvelle requête transmise à l'adresse interne générique déclarée.

4. Système selon la revendication 3, **caractérisé en ce que** ledit serveur de traduction d'adresse est constitué par un serveur proxy de messagerie instantanée interconnecté sur le réseau local d'entreprise.

5. Système selon l'une des revendications 3 ou 4, **caractérisé en ce que** ledit serveur de traduction d'adresse comprend au moins une table de correspondance contenant ladite adresse interne générique déclarée et l'ensemble des adresses internes ayant déclaré ladite adresse interne générique déclarée et associées en commun avec celle-ci pour former le groupe.

6. Système selon l'une des revendications 3 à 5, **caractérisé en ce que** l'opération pour toute adresse interne de déclaration d'une adresse interne générique consiste au moins à :

   - adresser à partir de chaque adresse interne audit serveur de traduction d'adresse une requête de déclaration d'adresse interne générique par l'intermédiaire du serveur privé de messagerie instantanée ;
   - effectuer au niveau dudit serveur de traduction d'adresse une mise à jour des tables de correspondance par adresse interne générique ;
   - transmettre audit serveur de messagerie instantanée grand public la ou les adresses internes génériques comme adresse interne de messagerie instantanée.

7. Système selon l'une des revendications 3 à 6, **caractérisé en ce que** sur requête adressée par ledit utilisateur client externe à l'entreprise à ladite adresse interne générique déclarée, pour l'exécution de la transmission de ladite requête à chaque adresse interne puis de la notification de réponse aux autres adresses internes membres du groupe, ledit serveur de traduction d'adresse comporte au moins :

   - des moyens de vérification de la disponibilité de chaque adresse interne membre du groupe associée à ladite adresse interne générique déclarée ;
   - des moyens de transmission, via ledit serveur externe de messagerie instantanée, d'un message d'acceptation de ladite requête audit utilisateur client externe ;
   - des moyens de transmission, via ledit serveur de messagerie instantanée privé, d'un message transmis par l'utilisateur client externe à ladite adresse interne générique, suite à la vérification de la disponibilité d'au moins une adresse interne membre du groupe associé à ladite adresse interne générique, vers chacune des adresses internes disponibles de ce groupe ;
   - des moyens de réception, via ledit serveur de messagerie instantanée privé, d'un message de réponse audit utilisateur client externe transmis par l'une desdites adresses internes membres du groupe ;
   - des moyens de transmission à chacune des autres adresses internes membres du groupe, distinctes de l'adresse interne auteur de la réponse, d'un message de notification de prise en charge de la transaction avec l'utilisateur client externe par ladite adresse interne auteur de la réponse.

8. Serveur de traduction d'adresse interne de messagerie instantanée d'un réseau local d'entreprise, **caractérisé en ce que** ledit serveur de traduction d'adresse constitué par un serveur proxy de messagerie instantanée interconnecté sur ledit réseau local d'entreprise, permet au moins à toute adresse interne de :

   - déclarer une adresse interne générique, commune à un groupe d'adresses internes distinctes, et, sur transmission par un utilisateur client externe d'une requête à ladite adresse interne générique déclarée,
   - transmettre ladite requête à chaque adresse interne membre du groupe, puis, sur transmission d'une réponse à ladite requête par l'une des adresses internes membre du groupe,
   - transmettre aux autres adresses internes membres du groupe distinctes de l'adresse interne auteur de la réponse, une notification de réponse, ce qui permet de maintenir lesdites autres adresses internes membres du groupe disponibles pour toute nouvelle requête transmise à l'adresse interne générique déclarée.

9. Serveur de traduction selon la revendication 8, **caractérisé en ce que** celui-ci comporte au moins une table de correspondance contenant ladite adresse générique déclarée et l'ensemble des adresses internes ayant déclaré ladite adresse interne générique déclarée et associées en commun avec celle-ci pour former le groupe.

10. Produit programme d'ordinateur comprenant des instructions de code de programme pour mettre en oeuvre les étapes du procédé selon les revendications 1 ou 2.

$$User_i@E$$

---

Déclaration
$$User_i@E \longrightarrow Commercial@E$$
$$LC$$

— A

---

$$Ext@X \xrightarrow{Req[Y]} Commercial@E$$

— B

---

Transmission
$$TI \xrightarrow{Req[Y]} User_i@E$$

— C

---

$$User_1@E \xrightarrow{Rep[OK]} Ext@X$$

— D

---

Transmission
$$TI \xrightarrow{Not[Rep[OK]]} User_{j \neq 1}@E$$

— E

---

$$User_{j \neq 1} = Libre$$

# FIG.1

*FIG.2a*

Ext@X ───*────────*─── SE

Se2

IF  5  4  3  2  1

1a:T1

1b:T2

User$_i$@E ───*──────────── 1 ── Se1

## FIG.2b

FIG.3a

EP 1 619 844 A1

**Ext@X** | **SE** | **Se2** | **Se1** | **User₁@E** | **User₂@E**

Demande connexion avec commercial / Envoi demande / $t_{gpo}$ / Vérifie disponibilité

$t_{x1}$

Demande acceptée / $t_{rgpo}$

Demande acceptée / $tg_{px}$

Vérifie table de surcharge d'identité

Message / $t_{x2}$ / Message / $t_{gp1}$

Message à user1 / $t_{01}$ / Message / $t_{1u1}$

Message à user2 / $t_{02}$ / Message / $t_{1u2}$

Répond client / $t_{r1u1}$

Réponse / $t_{rgp1}$ / Réponse / $t_{03}$ / $t_{r2u1}$

Réponse / $t_{rgp1x}$

Communication prise en charge par user1 / Communication prise en charge par user1 / $t_{1uj \neq 1}$

Message / Message / Vérifie table de correspondance

Message / Message

## FIG.3b

13

**Office européen
des brevets**

**RAPPORT DE RECHERCHE EUROPEENNE**

Numéro de la demande

EP 05 29 1534

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | US 6 415 318 B1 (AGGARWAL SUDHANSHU M ET AL) 2 juillet 2002 (2002-07-02) * colonne 2, ligne 14 - colonne 3, ligne 37 * * colonne 4, ligne 14 - colonne 12, ligne 12 * ----- | 1-10 | H04L12/58 |
| Y | US 2002/055975 A1 (PETROVYKH YEVGENIY) 9 mai 2002 (2002-05-09) * page 3, alinéa 32 - page 5, alinéa 44 * * page 5, alinéa 56 - page 19, alinéa 207 * ----- | 1-10 | |
| A | CARR J: "FOR CALIFORNIA PRODUCE GROWER PACIFIC INTERNATIONAL, IM CULTIVATES SALES, EFFICIENCY, AND COST SAVINGS. BETTING THE FARM ON INSTANT MESSAGING" NETWORK MAGAZINE, MILLER FREEMAN, HARRISON, SAN FRANSISCO, US, vol. 18, no. 8, août 2003 (2003-08), pages 46-49, XP001186761 ISSN: 1093-8001 * page 48, colonne de gauche, ligne 1 - page 49, colonne de droite, ligne 27 * ----- | 1-10 | |
| A | WO 03/044656 A (SBC TECHNOLOGY RESOURCES, INC; VISHIK, CLAIRE, SVETLANA; GORTI, SREENI) 30 mai 2003 (2003-05-30) * le document en entier * ----- | 1-10 | |

**DOMAINES TECHNIQUES RECHERCHES (Int.Cl.7)**

H04L
G06F

Le présent rapport a été établi pour toutes les revendications

| Lieu de la recherche | Date d'achèvement de la recherche | Examinateur |
|---|---|---|
| Munich | 13 octobre 2005 | Oteo Mayayo, C |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 05 29 1534

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-10-2005

| Document brevet cité au rapport de recherche | | Date de publication | Membre(s) de la famille de brevet(s) | | Date de publication |
|---|---|---|---|---|---|
| US 6415318 | B1 | 02-07-2002 | EP | 1023663 A1 | 02-08-2000 |
| | | | WO | 9845781 A1 | 15-10-1998 |
| | | | US | 5943478 A | 24-08-1999 |
| US 2002055975 | A1 | 09-05-2002 | US | 2003037113 A1 | 20-02-2003 |
| | | | US | 2003009530 A1 | 09-01-2003 |
| WO 03044656 | A | 30-05-2003 | AU | 2002348202 A1 | 10-06-2003 |

EPO FORM P0460

Pour tout renseignement concernant cette annexe : voir Journal Officiel de l'Office européen des brevets, No.12/82